# DEMANDE DE BREVET EUROPEEN

(11) **EP 2 081 114 A1**
(43) Date de publication de la demande: **22.07.2009**
(21) Numéro de dépôt: 08291194.2
(22) Date de dépôt: 16.12.2008
(51) Int. Cl.: G06F 9/50, G06F 12/02

(54) **Dispositif informatique à mémoire réservée pour des applications prioritaires**

(30) Priorité: 04.01.2008 FR 0800046
(71) Demandeur: Bull S.A.S., 78340 Les Clayes sous Bois (FR)
(72) Inventeur: Martinez, Patrice, 38100 Grenoble (FR)
(74) Mandataire: Pellegrini, Marie Claude

(57) **Abrégé**

Un dispositif informatique comprend un processeur, une mémoire, et un noyau de système d'exploitation (9). Ce dernier comprend des instructions pour gérer l'exécution de processus et l'allocation de mémoire à ces derniers. Le dispositif est capable d'exécuter des applications stockées (11), décomposables en processus. Le dispositif comprend une instruction spéciale capable de créer un processus inactif avec réservation d'une certaine quantité de mémoire, et un lanceur d'application (13), agencé de manière à supprimer le processus inactif, en libérant la mémoire réservée, et, consécutivement, à commander le lancement d'au moins une application particulière. La mémoire préalablement réservée est disponible pour l'application particulière.

## Description

L'invention a trait à un dispositif informatique, et plus particulièrement à un dispositif informatique du type comprenant au moins un processeur, une mémoire, et un noyau de système d'exploitation.

Il existe de nombreux dispositifs de ce type, tels que, par exemple, les ordinateurs à processeur unique ou à plusieurs processeurs, ou encore les grappes d'ordinateurs, ou "clusters", comprenant une pluralité d'ordinateurs.

Les dispositifs de ce type sont habituellement agencés de manière à exécuter des applications informatiques, par exemple stockées sur des supports de données tels que des disques durs, chaque application informatique étant décomposée en un ou plusieurs processus s'exécutant distinctement.

Le noyau du système d'exploitation comprend généralement des instructions pour gérer l'exécution des processus par les processeurs et l'allocation de mémoire à ces processus.

Dans un dispositif informatique, la quantité de mémoire vive est toujours limitée par la configuration matérielle du dispositif.

Lorsque l'exécution d'un processus, ou d'une application, exige une quantité de mémoire supérieure à la quantité de mémoire physiquement disponible au moment de cette exécution, le noyau du système d'exploitation est généralement agencé de manière à décharger une partie de la mémoire vive utilisée, en copiant le contenu de cette partie sur un espace de stockage de données différents, classiquement le disque dur du dispositif en question.

Cette opération, désignée par le terme anglais de "swapping", libère de la mémoire vive pour l'exécution du processus ou de l'application.

Les performances des supports de stockage de données actuels, telles que le temps d'accès et les vitesses de lecture/écriture, sont telles, que l'opération de "swapping" est assez lente. Et cette opération ralentit l'exécution du processus ou de l'application.

Pour certaines applications particulières, un tel ralentissement dans leur exécution est inacceptable.

Pour de telles applications, il n'existe à ce jour aucun moyen de garantir qu'une quantité de mémoire vive suffisante soit disponible à leur exécution, sans impliquer une opération de "swapping".

L'invention vise à améliorer la situation en proposant un dispositif informatique du type comprenant un processeur, une mémoire, et un noyau de système d'exploitation, le noyau comprenant des instructions pour gérer l'exécution de processus et l'allocation de mémoire à ces processus, le dispositif étant capable d'exécuter des applications stockées, décomposables en processus, qui comprend une instruction spéciale capable de créer un processus inactif avec réservation d'une certaine quantité de mémoire, et un lanceur d'application, agencé de manière à supprimer le processus inactif, en libérant la mémoire réservée, et, consécutivement, à commander le lancement d'au moins une application particulière, en sorte que la mémoire préalablement réservée est disponible pour l'application particulière.

L'invention propose également un procédé pour exécuter une application particulière parmi une pluralité d'applications stockées sur un dispositif informatique, comprenant les étapes de démarrage du dispositif informatique, création d'un processus inactif avec réservation d'une certaine quantité de mémoire, suppression dudit processus inactif, lancement d'au moins l'application particulière, consécutivement à l'étape de suppression, en sorte que la mémoire préalablement réservée est disponible pour l'application particulière.

Ainsi, il devient possible de réserver une certaine quantité de mémoire à une application particulière, cette quantité de mémoire ne pouvant être prise par d'autres applications. Une exécution performante de l'application en question peut donc être obtenue à tout moment.

D'autres caractéristiques et avantages de l'invention apparaîtront à l'examen de la description détaillée ci-après, des dessins et de l'annexe sur lesquels :
- la figure 1 représente schématiquement un dispositif informatique selon l'invention,
- la figure 2 représente fonctionnellement la structure d'un support de stockage de données pour le dispositif de la figure 1,
- la figure 3 est un ordinogramme illustrant le fonctionnement d'un lanceur d'application pour le dispositif selon l'invention, et
- l'annexe 1 représente du code informatique pour réaliser une instruction spéciale destinée au lanceur d'application.

Les dessins et l'annexe pourront non seulement servir à compléter l'invention, mais aussi contribuer à sa définition, le cas échéant.

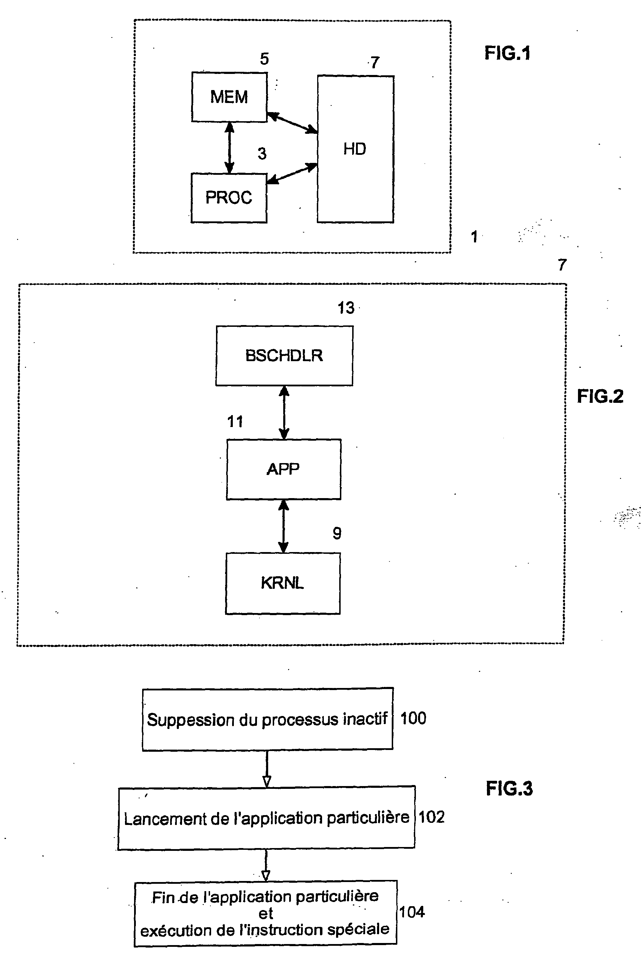

Sur la figure 1, on a représenté fonctionnellement la structure d'un dispositif informatique 1.

Le dispositif informatique 1 comprend au moins un processeur 3, de la mémoire vive 5 et un support de stockage de données 7, interagissant mutuellement pour l'exécution d'un système d'exploitation comprenant un noyau 9, visible sur la figure 2.

Par exemple, ce système d'exploitation est conforme au standard Unix.

Il s'agit ici d'un système d'exploitation de type Linux, comprenant un noyau de version 2,4 ou 2,6, obtenu par exemple de la distribution REDHAT RHEL3, RHEL4 ou RHEL5.

Dans un mode de réalisation particulier, le dispositif informatique 1 prend la forme d'une grappe ("cluster" en anglais) composée d'une pluralité d'ordinateurs, en particulier fonctionnant en tant que serveurs, chacun des ordinateurs de la grappe pouvant comprendre un ou plusieurs processeurs et de la mémoire vive. Sur la figure 1, l'ensemble des processeurs de la grappe est représenté par l'unique processeur 3, et l'ensemble de la mémoire vive de la grappe est représentée par la mémoire vive 5.

Sur la figure 2, le support de stockage de données 7 mémorise un système d'exploitation dont le noyau 9 comprend une partie logicielle formant un dispositif d'ordonnancement, ou "ordonnanceur" (non représenté), souvent désigné par le terme anglais de "scheduler".

L'ordonnanceur est agencé de manière à organiser l'accès des différents processus exécutés sur le dispositif informatique 1 aux ressources de ce dispositif.

L'ordonnanceur est agencé de manière à allouer à chaque processus à exécuter une partie des ressources du processeur 3 et de la mémoire vive 5.

En particulier, l'ordonnanceur peut être agencé de manière à diriger chaque processus à exécuter vers un processeur particulier ou un ordinateur particulier, dans le cas d'une machine à plusieurs processeurs ou d'une grappe de machines, respectivement.

Le support de stockage 7 mémorise en outre une ou plusieurs applications 11, avec lesquelles le système d'exploitation est susceptible d'interagir pour exécution.

Chaque application est décomposable en processus, lesquels sont susceptibles d'être traités par l'ordonnanceur du noyau 9 pour exécution par le dispositif informatique 1, y compris la mémoire 5 et le processeur 3.

Le support de stockage 7 mémorise encore un programme d'ordonnancement, ou ordonnanceur, de tâches 13, qui peut également être désigné par les termes anglais de "job scheduler" ou encore de "batch scheduler".

L'ordonnanceur de tâches 13 est agencé de manière à organiser le lancement de certaines au moins des applications 11 stockées sur le support de stockage 7.

En particulier, l'ordonnanceur de tâches 13 est agencé de manière à lancer, à l'exécution de chaque application, un processus parent, chaque application se décomposant elle-même généralement en plusieurs processus enfants.

Ici, le support de stockage 7 mémorise en outre une instruction spéciale, agencée de manière à créer un processus inactif avec réservation d'une quantité choisie de mémoire vive.

La quantité de mémoire vive est un paramètre de cette instruction, et est de préférence choisie en fonction de la quantité de mémoire exigée, ou du moins souhaitable, pour l'exécution d'une application particulière, jugée prioritaire, parmi les applications 11.

Ici, l'instruction spéciale utilise la commande Unix mlock().

Le système d'exploitation est agencé de manière que ladite instruction spéciale soit exécutée dès le démarrage du dispositif informatique 1, afin de garantir qu'une quantité de mémoire suffisante soit disponible pour la réservation.

Ici, ladite instruction spéciale est agencée sous la forme d'un processus s'exécutant en arrière-plan, ou "daemon" dans le langage Unix, chargé au démarrage du dispositif informatique 1.

L'annexe 1 indique, à titre d'exemple uniquement, le code source d'un programme susceptible de créer un processus inactif consommant et verrouillant (fonction "main") une quantité de mémoire souhaitée, une fois compilé et exécuté. Ce programme peut être utilisé en tant que "daemon".

Le terme de "daemon" se rapporte plus particulièrement aux systèmes Unix. L'instruction spéciale pourrait cependant être réalisée sous la forme d'un service dans des environnements de type Microsoft Windows (nom commercial enregistré), ou sous d'autres formes encore dans le cas de systèmes d'exploitation différents.

Dans des variantes de réalisation, l'instruction spéciale pourrait être lancée par l'intermédiaire de l'ordonnanceur de tâches 13.

Dès le démarrage du dispositif informatique 1, une quantité de mémoire, qu'il est possible de choisir, est réservée et verrouillée par ledit processus inactif.

Aucune des applications 11 ne peut alors utiliser cette quantité de mémoire. En particulier, cette quantité de mémoire ne peut faire l'objet d'une opération de "swapping", celle-ci étant en outre verrouillée.

L'ordonnanceur de tâches 13 est agencé de manière à supprimer ledit processus inactif et, consécutivement, à commander le lancement de ladite application particulière.

La figure 3 illustre le fonctionnement de l'ordonnanceur de tâches 13.

Dans une étape 100, on exécute une commande spéciale supprimant le processus inactif.

Par exemple, cette commande spéciale peut comprendre la commande Unix "kill".

La suppression du processus inactif libère la quantité de mémoire vive réservée.

Dans une étape 102, consécutive à l'étape 100, on lance l'application particulière au moyen d'une instruction d'appel. La mémoire libérée est disponible pour l'application particulière.

Dans une étape 104, on commande la fin de l'application particulière et, consécutivement, une nouvelle exécution de l'instruction spéciale.

Il est important que les étapes 100 et 102 soient vues par l'ordonnanceur du noyau 9 comme deux tâches se succédant immédiatement. Ainsi la mémoire vive réservée ne peut être attribuée à un processus différent.

Lorsque l'ordonnanceur de tâches 13 est agencé de manière à mettre en oeuvre l'étape 104, celui-ci agit en tant que finisseur d'application.

Lorsque l'ordonnanceur de tâches 13 est agencé de manière à mettre en oeuvre les étapes 100 et 102, celui-ci agit en tant que lanceur d'application.

Dans un mode de réalisation particulier, l'ordonnanceur de tâches 13 est du type commercialisé sous le nom LSF par la société Platform (nom déposé).

Cet ordonnanceur de tâche présente un fichier de configuration dans lequel chaque de tâche de lancement d'une application peut être définie.

Pour chaque tâche de lancement d'une application, les instructions à exécuter préalablement au lancement du processus parent de l'application en question sont regroupées dans une partie initiale.

Dans une partie principale, est défini le contexte de lancement du processus parent de l'application en question.

Dans une partie terminale, est défini le contexte dans lequel les processus de l'application en question prennent fin.

La tâche correspondant au lancement de ladite application particulière est configurée comme suit :
- la partie initiale comprend une instruction d'exécution de ladite commande spéciale supprimant le processus inactif, et
- la partie terminale comprend une instruction d'exécution de l'instruction spéciale destinée à la création du processus inactif.

Le dispositif selon l'invention permet de réserver une quantité de mémoire pour une application particulière, à l'exclusion de toute autre application.

Une telle application particulière peut être qualifiée de prioritaire.

En empêchant toute opération de "swapping" sur la quantité de mémoire réservée, un démarrage rapide et ainsi de bonnes performances d'exécution sont garanties pour l'application particulière. Cependant, ladite mémoire étant déverrouillée et libérée juste avant le lancement de l'application particulière, cette dernière peut également bénéficier d'une opération de "swapping", si son exécution le nécessite.

Le dispositif selon l'invention peut prévoir plusieurs instructions spéciales, destinées à réserver plusieurs quantités de mémoire vive, par exemple pour plusieurs applications prioritaires, ou pour différents états de fonctionnement d'une même application prioritaire.

L'ordonnanceur de tâches 13 peut en outre être agencé de manière à allouer la même quantité de mémoire à plusieurs applications différentes, par exemple lorsque celles-ci n'ont pas vocation à être exécutées simultanément.

Dans le cas de dispositifs présentant une topologie mémoire non uniforme (désignée "NUMA", pour "Non Uniform Memory Access"), il est avantageux de prévoir une instruction spéciale de réservation de mémoire pour chaque processeur ou pour chaque "noeud", un "noeud" désignant un ensemble formé de mémoire vive et d'un processeur sur un même bus.

L'invention propose une solution efficace au problème de la disponibilité de mémoire pour une application prioritaire. Cette solution est particulièrement souple. Elle est dénuée de toute modification du système d'information, et offre des fonctionnalités qui n'existent pas dans les systèmes d'exploitation actuels, en particulier de type Unix.

Dans la description ci-dessus, il a été fait référence au démarrage du système d'exploitation. Le démarrage d'un système d'exploitation peut couvrir des aspects techniques sensiblement différents suivant le système d'exploitation en question. Ce démarrage concerne en pratique un ensemble complexe d'opérations exécutées par le dispositif, préalablement à sa phase d'exploitation, ou de travail, à proprement parler. Il est important que l'exécution de l'instruction spéciale ait lieu le plus tôt possible de manière à disposer d'une quantité de mémoire suffisante pour réserver la quantité de mémoire souhaitée pour l'application particulière. Cette exécution peut donc se faire à différents stades du processus de démarrage du système d'exploitation, au chargement du noyau 9, ou même postérieurement au démarrage de ce noyau et préalablement au chargement d'autres applications.

L'invention peut être vue sous la forme d'un procédé pour exécuter une application particulière parmi une pluralité d'applications stockées sur un dispositif informatique.

L'invention n'est pas limitée aux modes de réalisation décrits ci avant, uniquement à titre d'exemples, mais englobe toutes les variantes que pourra envisager l'homme de l'art.

### ANNEXE 1

#include <stdlib.h>
#include <stdio.h>
#include <signal.h>
#include <string.h>
#include <sys/mman.h>

#define Kb *1024
#define Mb Kb*1024
#define Gb Mb*1024

```
 void usage (char *s)
 {
  fprintf (stderr, "%s <size in Gb to lock>\n",s);
  (void) exit(-1);
 }
 int main (int argc, char **argv)
 { unsigned long len;
  char * addr;
  if (argc < 2 ) usage (argv[0]);
  len = (int) (atof(argv[1])Gb);
  addr = malloc(len);
  signal (SIGCHLD, SIG_IGN);
  switch (fork()) {
    case 0 :
      if (mlock( addr, len)) {
        perror("mlock ");
        exit (-2);
      }
      while (1) sleep (3600);
    break;
    case -1 : exit (-1);
    default : exit ( 0);
  }
 }
```

## Revendications

1. Dispositif informatique (1) du type comprenant un processeur (3), une mémoire (5), et un noyau de système d'exploitation (9), le noyau comprenant des instructions pour gérer l'exécution de processus et l'allocation de mémoire à ces processus, le dispositif étant capable d'exécuter des applications stockées (11), décomposables en processus, **caractérisé en ce qu'**il comprend :
- une instruction spéciale capable de créer un processus inactif avec réservation d'une certaine quantité de mémoire (5), et
- un lanceur d'application (13), agencé de manière à supprimer le processus inactif, en libérant la mémoire réservée, et, consécutivement, à commander le lancement d'au moins une application particulière, en sorte que la mémoire préalablement réservée est disponible pour l'application particulière.

2. Dispositif selon la revendication 1, dans lequel le lanceur d'application (13) est agencé de manière à commander l'exécution d'une instruction de suppression du processus inactif puis, consécutivement, une instruction d'appel de l'application particulière.

3. Dispositif selon l'une des revendications 1 et 2, comprenant un dispositif d'ordonnancement de tâches (13), agencé de manière à mettre en oeuvre le lanceur d'application.

4. Dispositif selon l'une des revendications précédentes, comprenant en outre un finisseur d'application (13), agencé de manière à commander l'exécution de l'instruction spéciale, consécutivement à l'arrêt de l'application particulière.

5. Dispositif selon les revendications 3 et 4, dans lequel le dispositif d'ordonnancement de tâches (13) est agencé de manière à mettre en oeuvre le finisseur d'application.

6. Dispositif selon l'une des revendications précédentes, dans lequel l'instruction spéciale comprend une commande de réservation de mémoire acceptant une valeur de quantité de mémoire à réserver en tant que paramètre.

7. Dispositif selon l'une des revendications précédentes, dans lequel l'instruction spéciale est exécutée au démarrage du système d'exploitation (9).

8. Procédé pour exécuter une application particulière parmi une pluralité d'applications stockées sur un dispositif informatique, comprenant les étapes suivantes :
a) créer un processus inactif avec réservation d'une certaine quantité de mémoire (5),
b) supprimer ledit processus inactif (100),
c) lancer au moins l'application particulière (102), consécutivement à l'étape b), en sorte que la mémoire préalablement réservée est disponible pour l'application particulière.

9. Procédé selon la revendication 8, dans lequel :
- l'étape b) comprend l'exécution d'une instruction de suppression du processus inactif, et
- l'étape c) comprend l'exécution d'une instruction d'appel de l'application particulière.

10. Procédé selon l'une des revendications 8 et 9, comprenant en outre les étapes suivantes :
d) arrêter l'application particulière (104), et
e) commander l'exécution de l'instruction spéciale, consécutivement à l'étape d).

11. Procédé selon l'une des revendications 8 à 10, dans lequel l'étape a) comprend l'exécution d'une commande de réservation de mémoire avec une valeur de quantité de mémoire à réserver en tant que paramètre.

12. Procédé selon l'une des revendications 8 à 11, comprenant une étape de démarrage du système d'exploitation (9) préalablement à l'étape a).
